# EUROPEAN PATENT SPECIFICATION

(11) **EP 2 043 275 B1**
(45) Date of publication and mention of the grant of the patent: **04.09.2013**
(21) Application number: 07018853.7
(22) Date of filing: 25.09.2007
(51) Int. Cl.: H04B 3/32, H04M 3/22, H04L 25/03, H04B 7/04, H04B 7/06, H04B 17/00, H04L 1/00

(54) **Method and device for noise processing and communication system comprising such device**
Verfahren und Vorrichtung zur Rauschverarbeitung und Kommunikationssystem mit einer derartigen Vorrichtung
Procédé et dispositif de traitement sonore et système de communication comprenant un tel dispositif

(43) Date of publication of application: 01.04.2009
(73) Proprietor: ADTRAN GmbH, 13627 Berlin-Siemensstadt (DE)
(72) Inventor: Braun, Martin, 85254 Sulzemoos (DE); Filipiak, Frank, 81476 München (DE); Gernegross, Dietmar, 82041 Oberhaching (DE); Kozek, Werner, 1220 Wien (AT); Mück, Josef, 81675 München (DE); Schweyer, Bernhard, 82433 Bad Kohlgrub (DE)
(74) Representative: Brachmann, Roland W.

(56) References cited:
- WO-A-2006/129141
- US-A1- 2005 018 784
- US-A1- 2007 160 162
- US-A1- 2007 191 066

## Description

The invention relates to a method and to a device for noise processing and to a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices, from fiber-fed cabinets preferably located near the customer premises, or within buildings.

VDSL2 is designed to support the wide deployment of Triple Play services such as voice, video, data, high definition television (HDTV) and interactive gaming. VDSL2 enables operators and carriers to gradually, flexibly, and cost efficiently upgrade existing xDSL infrastructure.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

The xDSL wide band modulation approaches are problematic relating to crosstalk interference that is introduced to the twisted pair transmission line and received by the modem.

Crosstalk occurs when wires are coupled, in particular between wire pairs of the same or a nearby bundle that are used for separate signal transmission. Hence, data signals from one or more sources can be superimposed on and contaminate a data signal. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone lines in the same and/or a nearby multicore cable or bundle. With an increasing transmission speed, this problem even deteriorates, which may significantly limit a maximum data rate to be transmitted via a single line.

A multiple-input-multiple-output system (hereinafter referred to as MIMO system) is of significant importance in modern communication technology. Such MIMO system allows to model crosstalk interference of a telecommunication system.

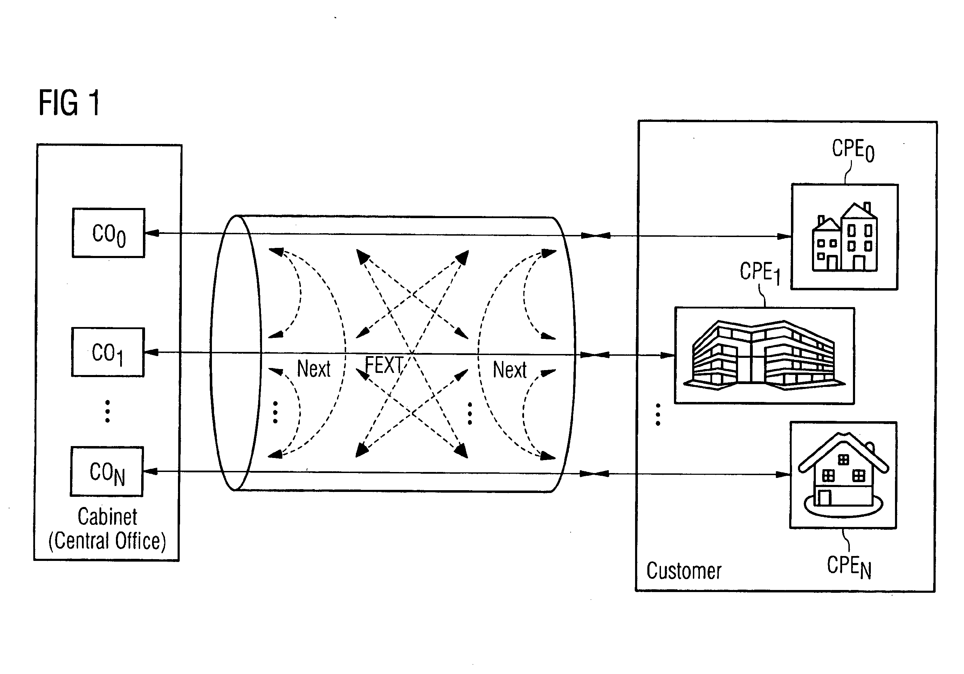

**Fig.1** illustrates in particular crosstalk comprising NEXT and FEXT components between a central office (CO) comprising several transceivers CO₀ to CO_{N} and several Customer Premises Equipments CPE₀ to CPE_{N}, connected via a Cable Binder.

An impact of NEXT can be reduced by utilizing frequency-division duplex between upstream and downstream direction. Current VDSL2 deployments are (indirectly) FEXT limited due to the choice of a relatively conservative Power Spectral Density (PSD) mask, thereby allowing to reduce NEXT in conjunction with a strong loop attenuation at frequencies beyond 1 MHz.

Downstream precompensation (achieved in particular by precoding) or upstream cancellation may allow utilization of more aggressive PSD masks (in particular with full binder deployments); at least, improvements regarding the reach and/or the data rate can be achieved by reducing crosstalk at existing PSD levels.

A prerequisite for the successful employment of DSM methods is the identification of the FEXT-channel. A particularly important and difficult aspect of FEXT-channel estimation concerns a feedback from the receiver.

Document W02006/129141 discloses a method comprising the steps according to the preamble of claim 1. Said prior art relates to a method for noise processing in a DSL system wherein data is transmitted from a central office (CO) to at least a customer premises equipment (CPE) wherein the CPE conveys SNR-data to a precoder and/or to a noise canceller and
- the precoder performs precoding of the data to be conveyed pursuant to the SNR-data received and the precoder is used in downstream direction from the CO to the at least one CPE;
- the noise canceller performs noise cancellation on the data received pursuant to the SNR-data received, and it is used at the CO in upstream direction.

Disadvantageously, existing systems do not provide such feedback in a timely fashion.

The **problem** to be solved is to avoid the disadvantages as set forth above and to provide an efficient input from the receiver side that can be used in particular for coherent and noncoherent wireline MIMO processing.

This problem is solved according to the features of the independent claims. Further embodiments result from the depending claims.

In order to overcome this problem, a method for noise processing is provided comprising the steps:
- data is transmitted from at least one transmitter to at least one receiver;
- the at least one receiver conveys SNR-data to a precoder and/or to a noise canceller.

In particular, the SNR-data may in comprise link state information and/or link quality information.

Such noise processing may in particular comprise noise indication to the precoder and/or to the noise canceller, it may also comprise noise detection and/or reduction conducted at the precoder and/or the noise canceller.

It is to be noted that the precoder allows in particular to process data prior to its transmission via at least one channel or via at least one line such that a noise, e.g., interference and/or crosstalk, is reduced when the data arrive at the receiver(s).

A noise canceller may be associated with a receiver and it may be used to reduce and/or cancel noise, e.g., interference and/or crosstalk by processing data arriving at this receiver.

In particular, the precoder and/or the noise canceller may be associated with or located at a Central Office (CO), to which several lines are attached, wherein said lines are at least partially combined by at least one cable binder.

The precoder as well as the noise canceller may be referred to as noise reduction means in particular processing a precoding matrix and/or a coefficient matrix by utilizing the SNR-data received.

Advantageously, this approach provides a fast (i.e. with low latency) and reliable (i.e. statistically unbiased and with low variance) information about a Signal-to-Noise Ratio (SNR) .

Within so-called non-coherent MIMO processing, a correlative analysis of link state and SNR across all managed ports may be utilized in order to perform a binder group classification.

Further, in so-called coherent MIMO processing it is advantageous to detect "leaving" ports, i.e., ports with unexpectedly broken connections due to switching-off of Customer Premises Equipments (CPEs) or due to impulse noise. Such detection may avoid the precoder and/or noise canceller to adjust to a faulty state and hence affect and/or impair other ports as well.

With the receiver providing SNR-data, advantageously nearly instantaneous SNR-information, such impairment of other ports (at the CO) can be avoided.

In an embodiment, the transmitter comprises the precoder that performs precoding of the data to be conveyed pursuant to the SNR-data received.

In another embodiment, the receiver comprises the noise canceller that performs noise cancellation on the data received pursuant to the SNR-data received.

In a further embodiment, wherein the SNR-data is generated based on at least one error detection code.

In a next embodiment, the error detection code is a CRC-Code.

It is also an embodiment that the SNR-data is generated based on at least one error correction code.

Pursuant to another embodiment, the error correction code is a Reed-Solomon-Code.

According to an embodiment, the precoder and/or the noise canceller each comprises a precoding matrix and/or a cancellation matrix comprising coefficients. Said coefficients may in particular be updated pursuant to a given schedule, e.g., at a given rate.

According to another embodiment, the coefficients are frozen in case the SNR-data fulfill a first criterion.

The first criterion may in particular comprise the property that a SNR per carrier (e.g., per tone) is determined.

Hence, such first criterion may stop an adaptation of the coefficients. E.g., in case the SNR-data reach a certain threshold that indicates an impairment of a particular line within the cable (binder), the Central Office may freeze further coefficient adaptation based on this SNR-data from this particular line. As the Central Office may adapt a cancellation matrix and/or a precoding matrix, the impact from this distinct line of low SNR may be disregarded, the coefficients that were frozen may be used for a further restart or reset.

In yet another embodiment, a reset or restart is conducted in case the SNR-data fulfill a second criterion, wherein the frozen coefficients are used for initializing purposes.

Hence, pursuant to the second criterion, a restart or reset may be initiated. Such second criterion can be represented by a threshold of SNR-data showing a high degree of deterioration (e.g., noise).

According to a next embodiment, the first criterion and/or the second criterion comprise at least one of the following:
- the SNR-data indicate an impairment that is worse than a given threshold;
- the SNR-data indicate an impairment that is worse than a given threshold for a predetermined period of time;
- the SNR-data provided indicate for n repetitions an impairment that is worse than a given threshold.

Pursuant to yet an embodiment, the precoder is used in downstream direction, in particular from a Central Office to several Customer Premises Equipments.

It is also an embodiment that the noise canceller is used in upstream direction, in particular from several Customer Premises Equipments towards the Central Office.

At least one cable binder may be connected to the Central Office.

It is a further embodiment that the precoder and/or the noise canceller are located and/or associated with the Central Office.

According to yet another embodiment, a channel between the at least one transmitter and the at least one receiver is represented by a multiple-input-multiple-output (MIMO) system.

According to a next embodiment, the noise comprises at least one of the following components:
- crosstalk, in particular near-end cross talk and/or far-end crosstalk;
- interference.

It is also an embodiment that the at least one transmitter and the at least one receiver are connected by at least one cable binder.

The problem stated above is also solved by a device for noise processing comprising a processor unit that is equipped /arranged such that the method as described is executable on said processor unit.

The device may in particular be used to reduce nose comprising in particular interference and/or crosstalk by precoding and/or noise cancellation.

According to an embodiment, said device is a communication device, in particular a Central Office (CO), a Digital Subscriber Line Access Multiplexer (DSLAM) or a Customer Premises Equipment (CPE).

The problem stated supra is further solved by a device for noise processing comprising a precoder and/or a noise canceller processing SNR-data that is provided by a receiver.

It is an embodiment that the device further comprises a S/H-Unit (Sample-Hold-Unit) that obtains the SNR-data.

According to another embodiment, the device is at least a part of a Central Office or it comprises a Central Office.

The problem stated above is also solved by a communication system comprising the device as described herein.

Embodiments of the invention are shown and illustrated in the following figures:
- Fig.2: shows a block diagram of a Single-Input-Single-Output (SISO) channel utilizing Discrete Multi-Tone (DMT) modulation such as, e.g., ADSL(2+) or VDSL2;
- Fig.3: shows a block diagram of downstream precoding for data to be conveyed from the Central Office to several CPEs;
- Fig.4: shows a block diagram of upstream noise-cancellation for data to be conveyed from several CPEs to the Central Office.

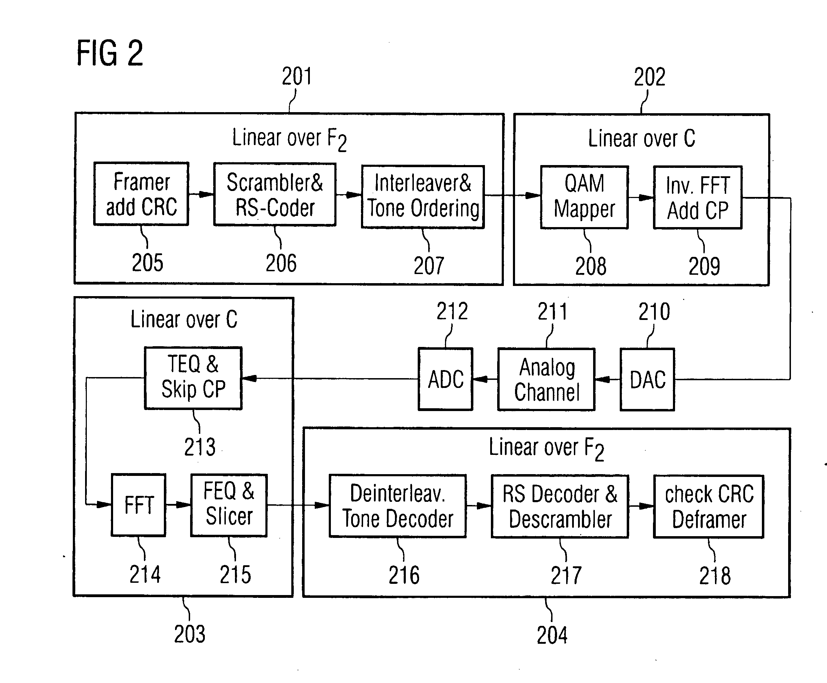

**Fig.2** shows a block diagram of a Single-Input-Single-Output (SISO) channel utilizing Discrete Multi-Tone (DMT) modulation such as, e.g., ADSL(2+) or VDSL2.

The transmitter comprises a processing stage 201 performing bit operations that are linear over F2 (binary numbers): A framer 205 adds a CRC frame to the data. Next, in a block 206, the data are scrambled and encoded by an error-detection code like the Reed-Solomon-Code (RS). The output of the block 206 is fed to an Interleaver & Tone Ordering unit 207.

The data are further processed by the transmitter in a processing stage 202 performing operations that are linear over C (complex numbers): A QAM Mapper 208 maps the data to symbols (constellations) in the QAM plane and a subsequent block 209 performs an inverse Fast Fourier Transform (FFT) and adds a cyclic prefix (CP).

The output of the block 209 is converted to analog signals by a Digital/Analog Converter DAC 210. Subsequently, data is conveyed via an Analog Channel 211 and at the receiver, data is converted to digital signals by an Analog/Digital Converter ADC 212.

A processing stage 203 at the receiver performs the inverse operations to the processing stage 202 and a processing stage 204 at the receiver performs the inverse operations to processing stage 201.

The output of ADC 212 is fed to a block 213 performing a Time Equalization (TEQ) with skipping of cyclic prefixes (CP). Next, a Fast Fourier Transform FFT is performed in a block 214 and the output is forwarded to a Frequency Domain Equalizer (FEQ) & Slicer 215. In the next stage, a

Deinterleaver and Tone Decoder 216 performs the inverse operation to block 207 and a subsequent RS-Decoder & Descrambler 217 performs the inverse operation of block 206. The block 218 performs a CRC check and removes the frame to forwards the (user) data.

Fig.2 visualizes that errors that may occur when transmitting data over the Channel 211 may be compensated up to a certain threshold by the RS-Code. Errors beyond this capacity of compensation are detected and hence indicated by the CRC information.

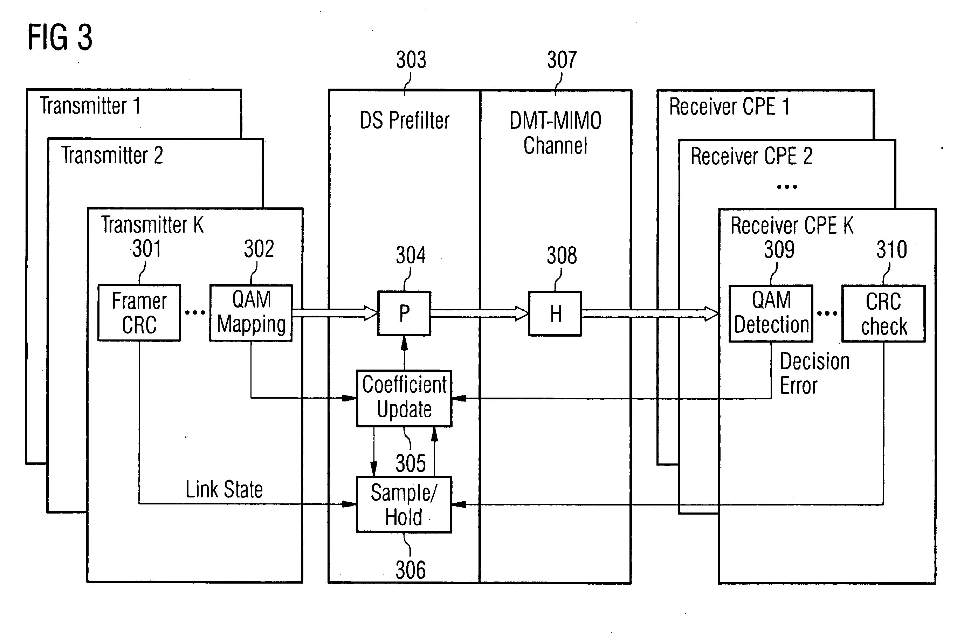

**Fig.3** shows a block diagram of downstream precoding for data to be conveyed from the Central Office to several CPEs.

Fig.3 depicts several transmitters Transmitter 1, Transmitter 2 and Transmitter K. Each transmitter comprises a Framer 301 and a QAM Mapping Unit 302, wherein between said Framer 301 and the QAM Mapping Unit 302 additional units similar to the units 206 and 207 shown in Fig.2 can be provided.

The output of the Transmitter K (as well as all other Transmitters 1, 2, ..., K-1) is forwarded to a Downstream Prefilter 303. The Downstream Prefilter 303 comprises a Precoding Matrix 303, a Coefficient Update Function 305 and a Sample/Hold-Function 306. An output from the Framer 301 conveys a Link State information to the Sample/Hold-Function 306. The Sample/Hold-Function 306 conveys information to the Coefficient Update Function 305 and vice versa. An output from the QAM mapping unit 302 is connected to the Coefficient Update Function 305, the latter being further connected to the Precoding Matrix 303 for updating the matrix' coefficients.

The Transmitters 1 to K as well as the Downstream Prefilter 303 may be located in and/or associated with a Central Office (CO) or a DSLAM.

A channel, that may be at least partially realized by at least one cable binder, is depicted by a DMT-MIMO Channel 307 comprising or represented by a Transfer Matrix 308.

It is to be noted that the DMT-MIMO Channel 307 may comprise the functionalities of boxes 209 to 214 as depicted in Fig.2.

The DMT-MIMO Channel 307 is further connected to several Receivers, i.e. CPE 1 to CPE K. Each receiver comprises a QAM Detection Unit 309 and a CRC Check Unit 310. Additional units similar to the units 216 and 217 shown in Fig.2 may be provided between unit 309 and unit 310.

The QAM Detection Unit 309 provides an output signal to the Coefficient Update Function 305 indicating a Decision Error (e.g., a difference between the position received in the QAM plane and the actual constellation). The CRC Check Unit 310 provides SNR-data to the Sample/Hold Function 306.

Hence, in case the SNR-data indicate noise that is above a predetermined threshold, the Sample/Hold Function 306 may freeze the actual coefficients. In case the noise gets worse or it stays above said threshold (for a predetermined period of time), a restart is conducted utilizing the coefficients as stored (frozen).

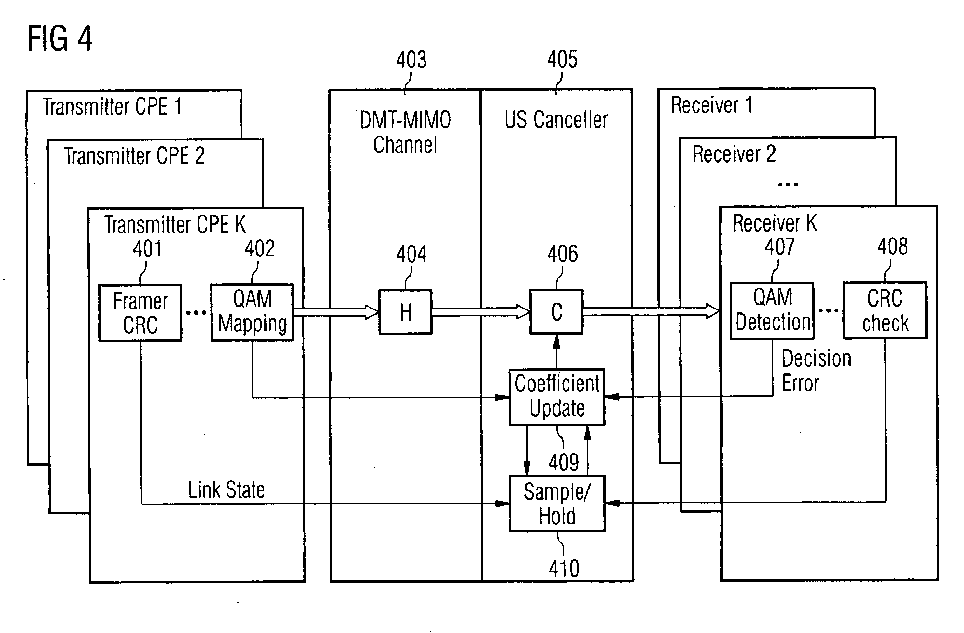

**Fig.4** shows a block diagram of upstream noise-cancellation for data to be conveyed from several CPEs to the Central Office.

Fig.4 visualizes several transmitters Transmitter CPE 1, Transmitter CPE 2 and Transmitter CPE K. Each transmitter CPE i comprises a Framer 401 and a QAM Mapping Unit 402, wherein between said Framer 401 and the QAM Mapping Unit 402 additional units similar to the units 206 and 207 shown in Fig.2 can be provided.

A channel, that may be at least partially realized by at least one cable binder, is depicted by a DMT-MIMO Channel 403 comprising or represented by a Transfer Matrix 404.

The output of the Transmitter CPE K (as well as all other Transmitters CPE 1, 2, ..., K-1) is forwarded to the DMT-MIMO Channel 403.

The DMT-MIMO Channel 403 is further connected to an Upstream Canceller 405 comprising a Cancellation Matrix 406, the Upstream Canceller 405 being further connected to several Receivers 1 to K. The Upstream Canceller 405 and the Receivers 1 to K may be located within the Central Office or the DSLAM.

Each receiver 1 to K comprises a QAM Detection Unit 407 and a CRC Check Unit 408. Additional units similar to the units 216 and 217 shown in Fig.2 may be provided between unit 407 and unit 408.

The Upstream Canceller 405 comprises the Cancellation Matrix 406, a Coefficient Update Function 409 and a Sample/Hold-Function 410. An output from the Framer 401 conveys a Link State information to the Sample/Hold-Function 410. The Sample/Hold-Function 410 conveys information to the Coefficient Update Function 409 and vice versa. An output from the QAM mapping unit 402 is connected to the Coefficient Update Function 409, the latter being further connected to the Cancellation Matrix 406 for updating the matrix' coefficients.

The QAM Detection Unit 407 provides an output signal to the Coefficient Update Function 409 indicating a Decision Error (e.g., a difference between the position received in the QAM plane and the actual constellation). The CRC Check Unit 408 provides SNR-data to the Sample/Hold Function 410.

Hence, in case the SCR-data indicate noise that is above a predetermined threshold, the Sample/Hold Function 410 may freeze the actual coefficients. In case the noise gets worse or it stays above said threshold (for a predetermined period of time), a restart is conducted utilizing the coefficients as stored (frozen).

This approach allows to utilize SNR-data, in particular a CRC (Cyclic Redundancy Check) code or information for almost instantaneous SNR measurement. Advantageously, the CRC code provides feedback in case Forward Error Correction (FEC) still cannot cope with a failure rate. In other words, the CRC may indicate deterioration of SNR if the SNR is below a certain threshold.

However, other kinds of SNR-data can be utilized as well, e.g., failure detection codes or failure correction codes. In particular, a Reed-Solomon-Code can be used for obtaining SNR-data.

The CRC is a linear code with a fixed block of redundancy bits and arbitrary length message bits. The CRC aims at error detection rather than error correction. Ethernet uses the CRC as its only error detection method (without further fault error correction, FEC) [IEEE 8023].

In DMT-based multicarrier systems an 8 bit CRC over one superframe can be used, i.e., the CRC is updated at an interval of approximately 10 ms to 60 ms depending on FEC parametrization such as interleaver depth and code rate.

Advantageously, the CRC (or even a factor 10 time-averaged statistic thereof) can be suited to provide a reliable trigger for non-stationary noise affecting a loop.

In particular, the block structure according to Fig.3 shows how CRC-monitoring can be used for Dynamic Spectrum Management Level 3 (DSM L3) control to be applied for leaving ports of a Central Office.

A CRC check information provided by CRC Check Units 310 or 408 may be a single bit, e.g., "0" if the check was positive and "1" if the check went wrong. Such single bit may be transferred via an overhead channel from the CPE to the CO.

The CO may use this information by a sliding memory. At the CO, a DSM controller unit performs a continuous update of the Precoding Matrix 304 based on, e.g., knowledge of input symbol (provided by the QAM Mapping Unit 302) and received QAM decision error (provided by the QAM Detection Unit 309). If a number of consecutive CRC detects and/or CRC events reach the DSM controller unit at the CO, the state of the Precoder Matrix 304 is frozen (hold position).

Further to the continuous registration of the CRC information it is advantageous to register the link state information (provided by the Framer CRC 301) to be able to return back from the hold state to the sample state and hence to be able to continue the adaptation of the coefficients in particular with an optimal speed.

It is to be noted that referring to the Central Office (CO) also implies a reference to a portion thereof or a DSLAM or a portion thereof. In addition, the CO as well as the DSLAM may be part of a device comprising the functionality as described herein.

### Abbreviations:

- CO: Central Office
- CPE: Customer Premises Equipment
- DMT: Discrete Multi-Tone (the modulation format of, e.g., VDSL2)
- DSLAM: Digital Subscriber Line Access Multiplexer
- DSM: Dynamic Spectrum Management
- DSMC: DSM controller module (comprises, e.g., FPGA and DSP board)
- FEQ: Frequency Domain Equalizer (module of up/downstream receiver)
- FEXT: Far-End Crosstalk
- FFT: Fast Fourier Transform
- LMS: LMS Algorithm
- MIMO: Multiple Input Multiple Output
- ML: Maximum Likelihood
- MMSE: Minimum Mean-Squared Error
- NEXT: Near-End Crosstalk
- P/S: Parallel-to-Serial Conversion
- PLL: Phase-Locked Loop
- QAM: Quadrature Amplitude Modulation
- RdkA: Receiver module downstream, part A, with line index k (k=1,2,..,K)
- RdkB: Receiver module downstream part B, with line index k (k=1,2,..,K)
- RukA: Receiver module upstream part A, with line index k (k=1,2,..,K)
- RukB: Receiver module upstream part B, with line index k (k=1,2,..,K)
- SCP: Skip Cyclic Prefix/Suffix (module of up/downstream receiver)
- SISO: Single-Input-Single-Output system such as underlying standard ADSL, VDSL2
- SLMS: Signed LMS Algorithm
- SNR: Signal-to-Noise Ratio
- SRA: Seamless Rate Adaptation
- TEQ: Time-Domain Equalizer
- Tuk: Transceiver module upstream
- ZF: Zero-Forcing

## Claims

1. A method for noise processing in a DSL system wherein
- data is transmitted from a Central Office to at least one Costumer Premises Equipment and/or vice versa,
- the at least one Costumer Premises Equipment conveys SNR-data to a precoder and/or to a noise canceller,
- the precoder performs precoding of the data to be conveyed pursuant to the SNR-data received,
- the precoder is used in downstream direction from the Central Office to the at least one Customer Premises Equipment,
- the noise canceller performs noise cancellation on the data received pursuant to the SNR-data received,
- the noise canceller is used in upstream direction from the at least one Customer Premises Equipment to the Central Office, and
- the precoder and/or the noise canceller each comprise a precoding matrix and/or a cancellation matrix comprising coefficients that are in particular updated at a given rate,
**characterized in that**
the SNR-data is generated based on at least one error correction code.

2. The method according to claim 1, wherein the error correction code is a CRC-Code.

3. The method according to claim 1, wherein the error correction code is a Reed-Solomon-Code.

4. The method according to any of the preceding claims,
wherein the coefficients are frozen in case the SNR-data fulfill a first criterion.

5. The method according to any of the preceding claims,
wherein a reset or restart is conducted in case the SNR-data fulfill a second criterion, wherein the frozen coefficients are used for initializing purposes.

6. The method according to claim 4 or 5, wherein the first criterion and/or the second criterion comprise at least one of the following:
- the SNR-data is worse than a given threshold;
- the SNR-data is worse than a given threshold for a predetermined period of time;
- the SNR-data provided is for n repetitions worse than a given threshold.

7. The method according to any of the preceding claims,
wherein the precoder and/or the noise canceller are located and/or associated with the Central Office.

8. The method according to any of the preceding claims,
wherein a channel between the at least one transmitter and the at least one receiver is represented by a multiple-input-multiple-output (MIMO) system.

9. The method according to any of the preceding claims,
wherein the noise comprises at least one of the following components:
- crosstalk, in particular near-end cross talk and/or far-end crosstalk;
- interference.

10. The method according to any of the preceding claims,
wherein the at least one transmitter and the at least one receiver are connected by at least one cable binder.

11. A system comprising means that are arranged such that a method according to any of the preceding claims is executable.

12. The system according to claim 11, wherein said system is a communication system, comprising in particular a Central Office and/or a Digital Subscriber Line Access Multiplexer and/or a Customer Premises Equipment.

13. A Digital Subscriber Line Access Multiplexer for a system according to claims 11 or 12 comprising means that are arranged such that the method according to any of claims 1 to 10 can be executed in the system according to claims 11 or 12.

14. A Customer Premises Equipment for a system according to claims 11 or 12 comprising means that are arranged such that the method according to any of claims 1 to 10 can be executed in the system according to claims 11 or 12.

## Patentansprüche

1. Verfahren zur Rauschverarbeitung in einem DSL-System, wobei:
- Daten von einer Central Office zu mindestens einer Customer Premises Equipment und/oder umgekehrt übertragen werden,
- die mindestens eine Customer Premises Equipment SNR-Daten zu einem Vorcodierer und/oder zu einem Rauschunterdrücker transportiert,
- der Vorcodierer das Vorcodieren der zu transportierenden Daten gemäß den empfangenen SNR-Daten durchführt,
- der Vorcodierer in der Abwärtsrichtung von der Central Office zu der mindestens einen Customer Premises Equipment verwendet wird,
- der Rauschunterdrücker Rauschunterdrückung auf den empfangenen Daten gemäß den empfangenen SNR-Daten durchführt,
- der Rauschunterdrücker in der Aufwärtsrichtung von der mindestens einen Customer Premises Equipment zur Central Office verwendet wird, und
- der Vorcodierer und/oder der Rauschunterdrücker jeweils eine Vorcodierungsmatrix und/oder eine Unterdrückungsmatrix aufweisen, die Koeffizienten aufweisen, die insbesondere bei einer gegebenen Rate aktualisiert werden, **dadurch gekennzeichnet, dass**:
die SNR-Daten basierend auf mindestens einem Fehlerkorrekturcode erzeugt werden.

2. Verfahren nach Anspruch 1, wobei der Fehlerkorrekturcode ein CRC-Code ist.

3. Verfahren nach Anspruch 1, wobei der Fehlerkorrekturcode ein Reed-Solomon-Code ist.

4. Verfahren nach einem der vorhergehenden Ansprüche, wobei die Koeffizienten eingefroren werden, wenn die SNR-Daten ein erstes Kriterium erfüllen.

5. Verfahren nach einem der vorhergehenden Ansprüche, wobei eine Rücksetzung oder ein Neustart durchgeführt wird, wenn die SNR-Daten ein zweites Kriterium erfüllen, wobei die eingefrorenen Koeffizienten zu Initialisierungszwecken verwendet werden.

6. Verfahren nach Anspruch 4 oder 5, wobei das erste Kriterium und/oder das zweite Kriterium mindestens eines von Folgendem aufweisen:
- die SNR-Daten sind schlechter als ein gegebener Schwellenwert;
- die SNR-Daten sind während eines vorbestimmten Zeitraums schlechter als ein gegebener Schwellenwert;
- die bereitgestellten SNR-Daten sind für n Wiederholungen schlechter als ein gegebener Schwellenwert.

7. Verfahren nach einem der vorhergehenden Ansprüche, wobei der Vorcodierer und/oder der Rauschunterdrücker sich bei der Central Office befinden und/oder ihr zugehörig sind.

8. Verfahren nach einem der vorhergehenden Ansprüche, wobei ein Kanal zwischen dem mindestens einen Sender und dem mindestens einen Empfänger durch ein Multiple-Input-Multiple-Output (MIMO) System dargestellt wird.

9. Verfahren nach einem der vorhergehenden Ansprüche, wobei das Rauschen mindestens eine der folgenden Komponenten aufweist:
- Nebensprechen, insbesondere Nahnebensprechen und/oder Fernnebensprechen;
- Interferenz.

10. Verfahren nach einem der vorhergehenden Ansprüche, wobei der mindestens eine Sender und der mindestens eine Empfänger durch mindestens einen Kabelbinder verbunden sind.

11. System, das Mittel aufweist, die derart eingerichtet sind, dass ein Verfahren nach einem der vorhergehenden Ansprüche ausgeführt werden kann.

12. System nach Anspruch 11, wobei das System ein Kommunikationssystem ist, das insbesondere ein Central Office und/oder einen Digital Subscriber Line Access Multiplexer und/oder eine Customer Premises Equipment aufweist.

13. Digital Subscriber Line Access Multiplexer für ein System nach Anspruch 11 oder 12, der Mittel aufweist, die derart eingerichtet sind, dass das Verfahren nach einem der Ansprüche 1 bis 10 im System nach Anspruch 11 oder 12 ausgeführt werden kann.

14. Customer Premises Equipment für ein System nach Anspruch 11 oder 12, das Mittel aufweist, die derart eingerichtet sind, dass das Verfahren nach Anspruch 1 bis 10 in dem System nach Anspruch 11 oder 12 ausgeführt werden kann.

## Revendications

1. Procédé de traitement de bruit dans un système DSL dans lequel :
- les données sont transmises depuis un Central à au moins un Equipement d'Abonné et/ou vice versa,
- l'au moins un Equipement d'Abonné achemine des données de rapport signal/bruit (SNR) jusqu'à un précodeur et/ou un suppresseur de bruit,
- le précodeur exécute un précodage des données à acheminer en fonction des données SNR reçues,
- le précodeur est utilisé dans le sens aval depuis le Central vers l'au moins un Equipement d'Abonné,
- le suppresseur de bruit exécute la suppression de bruit sur les données reçues en vertu des données SNR reçues,
- le suppresseur de bruit est utilisé dans le sens amont depuis l'au moins un Equipement d'Abonné vers le Central, et
- le précodeur et/ou le suppresseur de bruit comprennent chacun une matrice de précodage et/ou une matrice de suppression comprenant des coefficients qui sont en particulier actualisés à une fréquence donnée, **caractérisé en ce que**
les données SNR sont générées en fonction d'au moins un code de correction d'erreur.

2. Procédé selon la revendication 1, dans lequel le code de correction d'erreur est un Code CRC.

3. Procédé selon la revendication 1, dans lequel le code de correction d'erreur est un code Reed-Solomon.

4. Procédé selon l'une quelconque des revendications précédentes, dans lequel les coefficients sont figés lorsque les données SNR satisfont un premier critère.

5. Procédé selon l'une quelconque des revendications précédentes, dans lequel une remise à zéro ou un redémarrage est effectué lorsque les données SNR satisfont un second critère, les coefficients figés étant utilisés à des fins d'initialisation.

6. Procédé selon la revendication 4 ou 5, dans lequel le premier critère et/ou le second critère comprennent au moins l'un des critères suivants :
- les données SNR sont pires qu'un seuil donné ;
- les données SNR sont pires qu'un seuil donné pendant une période de temps prédéterminée ;
- les données SNR fournies pour n répétitions sont pires qu'un seuil donné.

7. Procédé selon l'une quelconque des revendications précédentes, dans lequel le précodeur et/ou le suppresseur de bruit sont situés et/ou associés au Central.

8. Procédé selon l'une quelconque des revendications précédentes, dans lequel un canal entre l'au moins un émetteur et l'au moins un récepteur est représenté par un système à entrées multiples et sorties multiples (MIMC).

9. Procédé selon l'une quelconque des revendications précédentes, dans lequel le bruit comprend au moins l'un des composants suivants :
- une diaphonie, en particulier une diaphonie proche et/ou une diaphonie éloignée ;
- un brouillage.

10. Procédé selon l'une quelconque des revendications précédentes, dans lequel l'au moins un émetteur et l'au moins un récepteur sont connectés par au moins une liaison de câble.

11. Système comprenant des moyens qui sont agencés de telle sorte qu'un procédé selon l'une quelconque des revendications précédentes soit exécutable.

12. Système selon la revendication 11, dans lequel ledit système est un système de communication, comprenant en particulier un Central et/ou un Multiplexeur à Accès de Ligne Numérique d'Abonné et/ou un Equipement d'Abonné.

13. Multiplexeur à Accès de Ligne Numérique d'Abonné pour un système selon les revendications 11 ou 12 comprenant des moyens qui sont agencés de telle sorte que le procédé selon l'une quelconque des revendications 1 à 10 puisse être exécuté dans le système selon les revendications 11 ou 12.

14. Equipement d'Abonné pour un système selon les revendications 11 ou 12 comprenant des moyens qui sont agencés de telle sorte que le procédé selon l'une quelconque des revendications 1 à 10 puisse être exécuté dans le système selon les revendications 11 ou 12.
